# EUROPÄISCHE PATENTSCHRIFT

(11) **EP 2 716 200 B1**
(45) Veröffentlichungstag und Bekanntmachung des Hinweises auf die Patenterteilung: **27.04.2016**
(21) Anmeldenummer: 13401108.9
(22) Anmeldetag: 01.10.2013
(51) Int. Cl.: A47L 15/00, A47L 15/42

(54) **Geschirrspülautomat und Verfahren zum Betrieb eines Geschirrspülautomaten**
Dishwasher and method for operating a dishwasher
Lave-vaisselle et procédé de fonctionnement d'une lave-vaiselle

(30) Priorität: 02.10.2012 DE 102012109364
(43) Veröffentlichungstag der Anmeldung: 09.04.2014
(73) Patentinhaber: Miele & Cie. KG, 33332 Gütersloh (DE)
(72) Erfinder: Schütte, Thorsten, 33102 Paderborn (DE)

(56) Entgegenhaltungen:
- EP-A2- 2 397 062
- DE-A1- 3 913 355
- DE-A1- 4 004 057

## Beschreibung

Die Erfindung betrifft einen Geschirrspülautomaten, insbesondere eine Haushaltsgeschirrspülmaschine, mit einem einen Spülraum bereitstellenden Spülbehälter zur Aufnahme von zu reinigendem Spülgut und einem Vorratsbehälter für die Zwischenspeicherung von Spülflotte, wobei der Vorratsbehälter an den Spülbehälter strömungstechnisch angeschlossen ist. Die Erfindung betrifft ferner ein Verfahren zum Betrieb eines Geschirrspülautomaten, insbesondere einer Haushaltsgeschirrspülmaschine.

Geschirrspülautomaten der gattungsgemäßen Art sind aus dem Stand der Technik an sich gut bekannt, weshalb es eines gesonderten druckschriftlichen Nachweises an dieser Stelle nicht bedarf.

Geschirrspülautomaten der eingangs genannten Art verfügen über einen einen Spülraum bereitstellenden Spülbehälter, der im bestimmungsgemäßen Verwendungsfall der Aufnahme von zu reinigendem Spülgut dient. Zur Beschickung des Spülbehälters mit Spülgut dient eine Beschickungsöffnung, die mittels einer verschwenkbar gelagerten Spülraumtür fluiddicht verschließbar ist.

Für eine Beaufschlagung von zu reinigendem Spülgut mit Spülflotte dienen innerhalb des Spülbehälters vorzugsweise verdrehbar angeordnete Sprüharme. Diese werden im bestimmungsgemäßen Verwendungsfall mit Spülflotte versorgt, infolgedessen eine Beaufschlagung des zu reinigenden Spülgutes mit Spülflotte erfolgt.

Gattungsgemäße Geschirrspülautomaten sind zum Zwecke der Wassereinsparung mit einem Vorratsbehälter zur Zwischenspeicherung von Spülflotte ausgerüstet. Ein solcher Vorratsbehälter dient dazu, am Ende eines bestimmungsgemäßen Programmablaufes im Spülbehälter noch befindliche Restspülflotte aufzunehmen und bis zum Beginn eines nächsten Spülprogramms zu bevorraten. Typischerweise wird die zum Ende eines Spülprogramms verhältnismäßig saubere Klarspülflotte zur Zwischenspeicherung genutzt. Mit Beginn eines neuen Spülprogramms wird die zwischengespeicherte Spülflotte in den Spülbehälter abgelassen, so dass nur noch eine um die Menge an zurückgeführter Spülflotte reduzierte Menge an Frischwasser für den Beginn eines neuen Spülprogramms erforderlich ist. In vorteilhafter Weise kann so eine Einsparung an Frischwasser erreicht werden.

Die innerhalb des Vorratsbehälters zwischengespeicherte Spülflotte unterliegt der Verkeimung. Dabei nimmt der Verkeimungsgrad mit zunehmender Dauer der Verweilung der Spülflotte im Vorratsbehälter zu.

Die DE 4004057 A1 offenbart einen Geschirrspülautomat mit einer davon separaten, unabhängigen Recycling-Einheit, welche einen strömungstechnisch an den Spülbehälter angeschlossenen Vorratsbehälter für die Zwischenspeicherung von Spülflotte umfasst. Dabei überwacht eine Steuerelektronik, dass vor dem Trennen der Recycling-Einheit vom Stromnetz, die zwischengespeicherte aus dem Vorratsbehälter abgelassen wird.

Die EP 2397062 A2 beschreibt einen Geschirrspülautomat mit einem Vorratsbehälter für die Zwischenspeicherung von Spülflotte. Sie offenbart insbesondere, dass die Spülflotte nach einem Netzunterbruch aus dem Vorratsbehälter abgelassen wird.

Die DE 3913355 A1 beschreibt ebenfalls einen Geschirrspülautomat mit einem Vorratsbehälter für die Zwischenspeicherung von Spülflotte. Sie lehrt insbesondere, dass der Vorratsbehälter nach einer bestimmten Zeitspanne von der Steuerung abgelassen wird.

Es ist die Aufgabe der Erfindung, einen Geschirrspülautomaten vorzuschlagen, der das Problem einer Verkeimung der im Vorratsbehälter zwischengespeicherten Spülflotte, insbesondere auch bei stromlos geschaltetem Automaten, vermeiden hilft. Ferner soll mit der Erfindung ein entsprechendes Verfahren zum Betrieb eines Geschirrspülautomaten vorgeschlagen werden.

Vorrichtungsseitig wird zur Lösung der Erfindung ein Geschirrspülautomat mit den Merkmalen von Anspruch 1 vorgeschlagen.

Zur Vermeidung eines kritischen Verkeimungsgrades und einer unter Umständen damit einhergehenden Geruchsbelästigung ist der Geschirrspülautomat vorzugsweise dazu eingerichtet, nach Ablauf einer vorbestimmten Verweildauer der Spülflotte im Vorratsbehälter, z.B. nach 36 Stunden, eine automatische Zwangsentleerung des Vorratsbehälters vorzunehmen, das heißt die im Vorratsbehälter zwischengespeicherte Spülflotte ohne weitere Nutzung zu verwerfen. Allerdings würde eine Zwangsentleerung des Vorratsbehälters dann nicht stattfinden, wenn der Geschirrspülautomat durch Trennung vom Stromnetz stromlos geschaltet ist.

Im Falle der Stromlosschaltung des Geschirrspülautomaten kann im Vorratsbehälter zwischengespeicherte Spülflotte nicht mehr abgelassen werden, das heißt eine Zwangsentleerung des Vorratsbehälters kann nicht mehr erfolgen. Infolgedessen kann es zu einer einen kritischen Verkeimungsgrad übersteigenden Verkeimung der im Vorratsbehälter zwischengespeicherten Spülflotte kommen.

Zu einer Stromlosschaltung kommt es typischerweise bei Geschirrspülautomaten, die in nur zeitweise genutzten Häusern oder Wohnungen aufgestellt sind, wie zum Beispiel in Ferienhäusern oder-wohnungen. Benutzerseitig wird beispielsweise der Netzstecker des Geschirrspülautomaten herausgezogen oder das gesamte Haus beziehungsweise die gesamte Wohnung bis zur nächsten Belegung stromlos geschaltet. Es können dann zum Teil mehrere Tage oder sogar Wochen vergehen, bis eine Wiederbelegung des Hauses oder der Wohnung und damit eine Strombeschaltung des Geschirrspülautomaten erfolgt. Über diese gesamte Zeitdauer wird die zwischengespeicherte Spülflotte im Vorratsbehälter bevorratet, so dass es je nach Dauer der Stromlosschaltung bis zu einer maximalen Verkeimung der Spülflotte und des Vorratsbehälters kommen kann.

Bei Wiederinbetriebnahme nach einer solchen Stillstandzeit durch Stromlosschaltung kann eine Spülung des Vorratsbehälters durchgeführt werden, zu welchem Zweck Sonderspülprogramme vorgesehen sein können. Mit einem solchen Sonderspülprogramm kann in vorteilhafter Weise gewährleistet werden, dass die im Vorratsbehälter verkeimte Spülflotte nicht in den Spülbehälter des Geschirrspülautomaten zur Durchführung eines eigentlichen Spülprogramms gelangt. Allerdings lässt sich durch ein solches Spülprogramm nicht die innenseitig des Vorratsbehälters anhaftende Verkeimung entfernen. Es bleiben vielmehr nach einem Abpumpen der verkeimten Spülflotte Verkeimungsherde innerhalb des Vorratsbehälters zurück, so dass es bei einem bestimmungsgemäßen Wiederauffüllen des Vorratsbehälters mit Spülflotte zu einer sofortigen Verkeimung der neu in den Vorratsbehälter eingefüllten Spülflotte kommt. Darüber hinaus bedingt die Verunreinigung der neu in den Vorratsbehälter eingefüllten Spülflotte durch die im Vorratsbehälter noch befindlichen Keimherde ein sehr viel schnelleres Keimwachstum, was im Ergebnis zu einer sehr viel schnelleren Verkeimung der neu in den Vorratsbehälter eingefüllten Spülflotte kommt. Selbst bei einem automatischen Abpumpen der neu eingefüllten Spülflotte nach Ablauf einer vorgegebenen Zeitspanne kann deshalb der kritische Verkeimungsgrad bereits überschritten sein. Unter Umständen kommt die insoweit verkeimte Spülflotte bei der Durchführung eines bestimmungsgemäßen Programmablaufs zum Einsatz, was dann zu einer Kontamination des zu reinigenden Spülgutes führen kann.

Die vorbeschriebene Problematik wird mit der erfindungsgemäßen Ausgestaltung vollends vermieden. Danach ist nämlich ein Signalgeber vorgesehen, der ein verwenderseitig wahrnehmbares Signal abgibt, sofern es im Falle eines befüllten Vorratsbehälters zu einer Stromlosschaltung des Automaten kommt.

Eine Zwangsentleerung des Vorratsbehälters ist im Falle einer Stromlosschaltung des Automaten nicht mehr möglich. Es ist deshalb erfindungsgemäß ein Signalgeber vorgesehen, der ein entsprechendes Warnsignal abgibt. Dem Verwender wird so angezeigt, dass vor einer Stromlosschaltung des Automaten zunächst eine Entleerung des Vorratsbehälters stattzufinden hat. Eine ungewollte Stromlosschaltung des Automaten bei noch befülltem Vorratsbehälter wird so vermieden. Bei nicht befülltem, das heißt entleertem Vorratsbehälter wird im Falle einer Stromlosschaltung des Automaten seitens des Signalgebers kein Signal ausgelöst.

Bei dem nach der Erfindung vorgesehenen Signalgeber kann es sich um einen visuell und/oder akustisch wahrnehmbaren Signalgeber handeln. Es ist indes bevorzugt, einen akustischen Signalgeber, beispielsweise in Form eines Summers einzusetzen. Dabei kann gemäß einem weiteren Merkmal der Erfindung vorgesehen sein, dass als akustischer Signalgeber ein solcher Signalgeber zum Einsatz kommt, über den der Geschirrspülautomat ohnehin verfügt. Gleiches gilt hinsichtlich eines visuell wahrnehmbaren Signalgebers. Auch diesbezüglich kann ein vom Geschirrspülautomat ohnehin bereitgestellter Signalgeber genutzt werden, beispielsweise das Anzeigendisplay des Geschirrspülautomaten.

Die Versorgung des erfindungsgemäßen Signalgebers mit Energie erfolgt durch eine vom Stromnetz autarke, das heißt unabhängige Energieversorgung. Diese Energieversorgung verfügt über einen Kondensator oder einen wiederaufladbaren Akkumulator. Dabei ist es bevorzugt, die Energieversorgung als Bestandteil der Elektronik des Geschirrspülautomaten auszubilden, so dass keine im Besonderen durchzuführende Montagetätigkeit beim Zusammenbau des Geschirrspülautomaten erforderlich ist.

Je nach eingesetzter Energieversorgung kann ein vom Geschirrspülautomaten ohnehin bereitgestellter Signalgeber nicht als erfindungsgemäßer Signalgeber eingesetzt werden. In diesem Fall ist als erfindungsgemäßer Signalgeber ein zu unter Umständen schon vorhandenen Signalgebern separater Signalgeber einzusetzen. Dieser ist dann bevorzugterweise zusammen mit der Energieversorgung als Teil der Geschirrspülautomatenelektronik ausgebildet.

Es kann gemäß einem weiteren Merkmal der Erfindung vorgesehen sein, dass an die Energieversorgung zusätzlich zum Signalgeber ein Anzeigedisplay und/oder eine Akustikeinheit des Automaten angeschlossen ist/sind. In diesem Fall werden nicht nur der Signalgeber sondern auch das Anzeigendisplay und/oder eine Akustikeinheit des Geschirrspülautomaten über die Energieversorgung mit Energie bedient, so dass gleichzeitig zum Signalgeber eine Informationsvermittlung an den Verwender über das Anzeigendisplay und/oder die Akustikeinheit des Geschirrspülautomaten erfolgen kann.

Gemäß eines typischen Verwendungsfalls erfolgt eine Verwenderwarnung allein durch den erfindungsgemäß vorgegebenen Signalgeber, beispielsweise in Form eines Summtons. Verwenderseitig hat sodann eine Strombeschaltung des Automaten stattzufinden. Sobald dies erfolgt ist, der Geschirrspülautomat also wieder an das öffentliche Stromnetz gekoppelt ist und genügend Energie zur Verfügung steht, kann eine umfassende Informationsvermittlung des Verwenders über das Anzeigendisplay des Geschirrspülautomaten stattfinden.

Verfahrensseitig wird zur Lösung der eingangs genannten Aufgabe vorgeschlagen ein Verfahren zum Betrieb eines Geschirrspülautomaten der erfindungsgemäßen Art, bei dem vom Signalgeber ein akustisches und/oder visuelles Signal abgegeben wird, wenn bei befülltem Vorratsbehälter eine Stromlosschaltung des Automaten erfolgt. Es stellen sich infolge dieser Verfahrensdurchführung die schon vorbeschriebenen Vorteile ein.

In einer Weiterbildung dieses Verfahrens kann vorgesehen sein, dass im Falle einer Strombeschaltung des Automaten eine Informationsvermittlung über ein Anzeigendisplay des Automaten erfolgt. Gemäß dieser Verfahrensdurchführung wird der Verwender nach einer Wiederbestromung des Automaten darüber informiert, dass der Vorratsbehälter noch mit Spülflotte befüllt ist und vor einer Stromlosschaltung zunächst einmal zu entleeren ist. Verwenderseitig kann dann eine Entleerung des Vorratsbehälters vorgenommen werden.

Alternativ zu dieser Verfahrensdurchführung kann vorgesehen sein, dass im Falle einer Strombeschaltung des Automaten eine automatische Entleerung des Vorratsbehälters durchgeführt wird. Gemäß dieser Verfahrensalternative erfolgt bei einer Wiederbestromung des Automaten eine automatische Entleerung des Vorratsbehälters, das heißt eine Entleerung des Vorratsbehälters ist nicht verwenderseitig vorzunehmen.

Sobald eine Entleerung des Vorratsbehälters stattgefunden hat, kann eine Stromlosschaltung des Automaten erfolgen, wobei in diesem Fall eine Signalabgabe durch den erfindungsgemäß vorgesehenen Signalgeber nicht erfolgt.

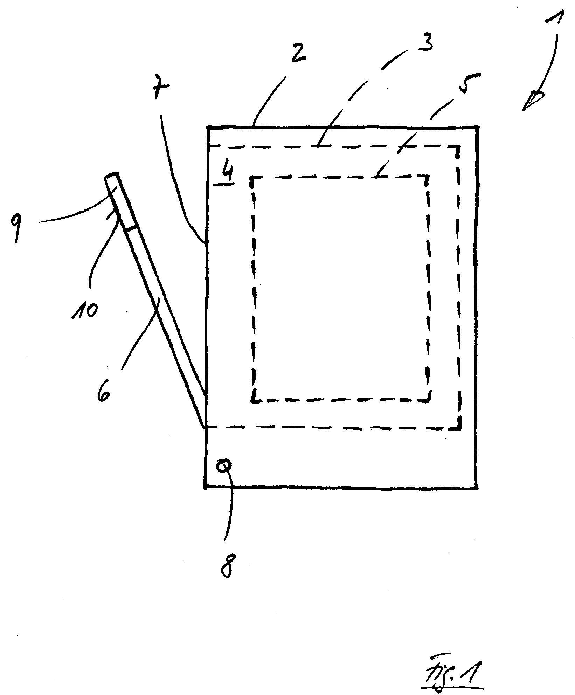

Weitere Merkmale und Vorteile der Erfindung ergeben sich aus der nachfolgenden Beschreibung anhand der einzigen Fig. 1, die in schematischer Darstellung einen Geschirrspülautomaten 1 nach der Erfindung zeigt.

Der Geschirrspülautomat 1 verfügt über ein Gehäuse 2, das einen einen Spülraum 4 bereitstellenden Spülbehälter 3 aufnimmt. Der Spülbehälter 3 dient im bestimmungsgemäßen Verwendungsfall der Aufnahme von zu reinigendem Spülgut, zu welchem Zweck typischerweise Spülkörbe vorgesehen sind, die der besseren Übersicht wegen in der Figur nicht dargestellt sind.

Der vom Spülbehälter 3 bereitgestellt Spülraum 4 ist über eine Beschickungsöffnung 7 zugänglich. Diese ist mittels einer verschwenkbar am Gehäuse 2 angeordneten Spülraumtür 6 fluiddicht verschließbar.

Zur Beaufschlagung von zu reinigendem Spülgut mit Spülflotte sind innerhalb des Spülbehälters 3 in den Figuren nicht näher dargestellte Sprüharme angeordnet.

Die Spülraumtür 6 verfügt zum Zwecke einer bestimmungsgemäßen Bedienung des Geschirrspülautomaten 1 über ein Bedienfeld 9. Dieses ist mit einem Anzeigedisplay 10 ausgerüstet, das zum Zwecke der optischen Anzeige beispielsweise über LEDs verfügt.

Der Geschirrspülautomat 1 verfügt desweiteren über einen Vorratsbehälter 5 für die Zwischenspeicherung von Spülflotte. Dieser Vorratsbehälter 5 kann innerhalb des Gehäuses 2 oder auch außerhalb desselben ausgebildet sein. Im gezeigten Ausführungsbeispiel ist der Vorratsbehälter 5 im nicht näher dargestellten Spaltraum zwischen Spülbehälter 3 einerseits und Gehäuse 2 andererseits untergebracht.

Der Vorratsbehälter 5 ist strömungstechnisch mit dem Spülbehälter 3 gekoppelt. Über diese strömungstechnische Verbindung kann dem Spülbehälter 3 Spülflotte entnommen und dem Vorratsbehälter 5 zugeführt beziehungsweise in umgekehrter Richtung aus dem Vorratsbehälter 5 in den Spülbehälter 3 überführt werden.

Der Vorratsbehälter 5 dient der Zwischenspeicherung von Spülflotte. Typischerweise wird dem Spülbehälter 3 zum Ende eines bestimmungsgemäß durchlaufenden Spülprogramms Spülflotte entnommen und im Vorratsbehälter 5 bis zum Beginn eines nächsten Spülprogramms zwischengespeichert. Typische Vorratsbehälter 5 haben ein Speichervolumen, das zwischen zwei und vier Liter beträgt.

Die im Vorratsbehälter 5 zwischengespeicherte Spülflotte verkeimt im Laufe der Zeit und es können sich Ablagerungen, Bio-Film und dergleichen sowohl in der Spülflotte als auch im Inneren des Vorratsbehälters 5 ausbilden. Hierdurch können unangenehme Gerüche entstehen. Es besteht zudem die Gefahr, dass sich etwaige Ablagerungen, Bio-Filme und/oder dergleichen ablösen, was dann zu einer Funktionsbeeinträchtigung oder sogar zu einem Komplettausfall des Vorratsbehälters 5 oder sogar des gesamten Geschirrspülautomaten 1 führen kann.

Um dieser Problematik vorzubeugen, ist es unter anderem vorgesehen, das nach Ablauf einer gewissen Zeitdauer der Zwischenspeicherung von Spülflotte eine Zwangsentleerung des Vorratsbehälters durchgeführt wird. Es findet in diesem Fall keine Wiederverwendung der Spülflotte statt. Diese wird vielmehr zwecks Vermeidung einer weiterführenden Verkeimung verworfen und durch Zwangsentleerung aus dem Vorratsbehälter 5 geführt.

Eine Zwangsentleerung des Vorratsbehälters 5 kann dann nicht durchgeführt werden, wenn es vorher zu einer Stromlosschaltung des Geschirrspülautomaten 1 kommt. Um einer solch ungewollten Stromlosschaltung des Geschirrspülautomaten 1 bei noch befülltem Vorratsbehälter 5 entgegenzuwirken, verfügt der Geschirrspülautomat 1 über einen Signalgeber 8, beispielsweise in Form eines Summers. Kommt es bei noch befülltem Vorratsbehälter 5 zu einer Stromlosschaltung des Geschirrspülautomaten 1, so gibt der Signalgeber 8 ein entsprechendes Signal ab, so dass verwenderseitig eine Wiederbestromung des Geschirrspülautomaten 1 vorgenommen werden kann. Sobald eine (Wieder)Bestromung des Geschirrspülautomaten 1 gegeben ist, kann eine Zwangsentleerung des Vorratsbehälters 5 durchgeführt werden, die entweder manuell durch den Verwender oder automatisch eingeleitet wird.

Im gezeigten Ausführungsbeispiel ist der Signalgeber 8 als separater Signalgeber ausgebildet. Es kann auch vorgesehen sein, als Signalgeber 8 einen vom Geschirrspülautomaten 1 ohnehin bereitgestellten Signalgeber zu verwenden, beispielsweise das Anzeigedisplay des Bedienfeldes 9.

### Bezugszeichen

- 1: Geschirrspülautomat
- 2: Gehäuse
- 3: Spülbehälter
- 4: . Spülraum
- 5: Vorratsbehälter
- 6: Spülraumtür
- 7: Beschickungsöffnung
- 8: Signalgeber
- 9: Bedienfeld
- 10: Anzeigedisplay

## Patentansprüche

1. Geschirrspülautomat (1), insbesondere Haushaltsgeschirrspülmaschine, mit einem einen Spülraum (4) bereitstellenden Spülbehälter (3) zur Aufnahme von zu reinigendem Spülgut und einem Vorratsbehälter (5) für die Zwischenspeicherung von Spülflotte, wobei der Vorratsbehälter (5) an den Spülbehälter (4) strömungstechnisch angeschlossen ist,
**gekennzeichnet durch**
einen Signalgeber (8), der dazu eingerichtet ist, bei gefülltem Vorratsbehälter (5) im Falle einer Stromlosschaltung des Geschirrspülautomaten (1) auszulösen,
und eine vom Stromnetz unabhängige Energieversorgung für den Signalgeber (8).

2. Geschirrspülautomat (1) nach Anspruch 1,
**dadurch gekennzeichnet,**
**dass** der Signalgeber (8) ein akustischer und/oder visueller Signalgeber ist.

3. Geschirrspülautomat (1) nach Anspruch 1 oder 2,
**dadurch gekennzeichnet,**
**dass** die Energieversorgung einen Kondensator aufweist.

4. Geschirrspülautomat (1) nach Anspruch 1 oder 2,
**dadurch gekennzeichnet,**
**dass** die Energieversorgung einen Akkumulator aufweist.

5. Geschirrspülautomat (1) nach einen der vorhergehenden Ansprüche,
**dadurch gekennzeichnet,**
**dass** der Signalgeber (8) von einem Anzeigedisplay (10) des Geschirrspülautomaten (1) und/oder dass der Signalgeber (8) von einer Akustikeinheit des Geschirrspülautomaten (1) bereitgestellt ist.

6. Geschirrspülautomat (1) nach einem der vorhergehenden Ansprüche,
**dadurch gekennzeichnet,**
**dass** zusätzlich zum Signalgeber (8) ein Anzeigedisplay (10) und/oder eine Akustikeinheit des Geschirrspülautomaten (1) an die Energieversorgung angeschlossen ist/sind.

7. Verfahren zum Betrieb eines Geschirrspülautomaten (1) mit einem einen Spülraum (4) bereitstellenden Spülbehälter (3) zur Aufnahme von zu reinigendem Spülgut und einem Vorratsbehälter (5) für die Zwischenspeicherung von Spülflotte, wobei der Vorratsbehälter (5) an den Spülbehälter (3) strömungstechnisch angeschlossen ist, bei dem von einem Signalgeber (8), welcher von einer vom Stromnetz unabhängigen Energieversorgung mit Energie versorgt wird, ein akustisches und/oder visuelles Signal abgegeben wird, wenn bei befülltem Vorratsbehälter (5) eine Stromlosschaltung des Geschirrspülautomaten (1) erfolgt.

8. Verfahren nach Anspruch 7,
**dadurch gekennzeichnet,**
**dass** im Falle einer Strombeschaltung des Geschirrspülautomaten (1) eine Informationsvermittlung über ein Anzeigendisplay (10) des Geschirrspülautomaten (1) erfolgt.

9. Verfahren nach Anspruch 7,
**dadurch gekennzeichnet,**
**dass** im Falle einer Strombeschaltung des Geschittspülautomaten (1) eine automatische Entleerung des Vorratsbehälters (5) durchgeführt wird.

## Claims

1. Automatic dishwasher (1), in particular a domestic dishwasher, comprising a washing container (3) that provides a washing chamber (4) for receiving washware to be cleaned and a storage container (5) for temporarily storing washing solution, the storage container (5) being connected to the washing container (4) in terms of flow,
**characterised by**
a signal transmitter (8) which is designed to trigger if the automatic dishwasher (1) is de-energised when the storage container (5) is full, and an energy supply for the signal transmitter (8) that is independent of the mains supply.

2. Automatic dishwasher (1) according to claim 1,
**characterised in that**
the signal transmitter (8) is an acoustic and/or visual signal transmitter.

3. Automatic dishwasher (1) according to either claim 1 or claim 2,
**characterised in that**
the energy supply comprises a capacitor.

4. Automatic dishwasher (1) according to either claim 1 or claim 2,
**characterised in that**
the energy supply comprises an accumulator.

5. Automatic dishwasher (1) according to any of the preceding claims,
**characterised in that**
the signal transmitter (8) is provided by a display (10) of the automatic dishwasher (1) and/or **in that** the signal transmitter (8) is provided by an acoustic unit of the automatic dishwasher (1).

6. Automatic dishwasher (1) according to any of the preceding claims, **characterised in that**,
in addition to the signal transmitter (8), a display (10) and/or an acoustic unit of the automatic dishwasher (1) is/are connected to the energy supply.

7. Method for operating an automatic dishwasher (1) comprising a washing container (3) that provides a washing chamber (4) for receiving washware to be cleaned and a storage container (5) for temporarily storing washing solution, wherein the storage container (5) is connected to the washing container (3) in terms of flow, in which method an acoustic and/or visual signal is emitted by a signal transmitter (8), which is supplied with energy by an energy supply that is independent of the power supply, if the automatic dishwasher (1) is de-energised while the storage container (5) is full.

8. Method according to claim 7,
**characterised in that**
when the automatic dishwasher (1) is connected to the power, information is shared by means of a display (10) of the automatic dishwasher (1).

9. Method according to claim 7,
**characterised in that**
when the automatic dishwasher (1) is connected to the power, the storage container (5) is automatically emptied.

## Revendications

1. Lave-vaisselle automatique (1), en particulier lave-vaisselle domestique, avec une cuve de lavage (3), fournissant un espace de lavage (4), destinée à recevoir les articles à nettoyer et avec un réservoir (5) pour le stockage intermédiaire du bain de lavage, dans lequel le réservoir (5) est en communication d'écoulement à la cuve de lavage (4),
**caractérisé par**
un générateur de signaux (8) qui est agencé pour déclencher en cas de mise hors tension du lave-vaisselle automatique (1) alors que le réservoir (5) est rempli,
et par une alimentation en énergie indépendante du secteur pour le générateur de signaux (8).

2. Lave-vaisselle automatique (1) selon la revendication 1,
**caractérisé en ce que**
le générateur de signaux (8) est un générateur de signaux acoustiques et/ou visuels.

3. Lave-vaisselle automatique (1) selon la revendication 1 ou 2,
**caractérisé en ce que**
l'alimentation en énergie présente un condensateur.

4. Lave-vaisselle automatique (1) selon la revendication 1 ou 2,
**caractérisé en ce que**
l'alimentation en énergie présente un accumulateur.

5. Lave-vaisselle automatique (1) selon l'une des revendications précédentes,
**caractérisé en ce que**
le générateur de signaux (8) est fourni par un afficheur (10) du lave-vaisselle automatique (1) et/ou **en ce que** le générateur de signaux (8) est fourni par une unité acoustique du lave-vaisselle automatique (1).

6. Lave-vaisselle automatique (1) selon l'une des revendications précédentes,
**caractérisé en ce que**,
en plus du générateur de signaux (8), un afficheur (10) et/ou une unité acoustique du lave-vaisselle automatique (1) est/sont raccordé(s) à l'alimentation en énergie.

7. Procédé de fonctionnement d'un lave-vaisselle automatique (1) avec une cuve de lavage (3), fournissant un espace de lavage (4), destinée à recevoir les articles à nettoyer et avec un réservoir (5) pour le stockage intermédiaire du bain de lavage, dans lequel le réservoir (5) est en communication d'écoulement à la cuve de lavage (3), dans lequel un signal acoustique et/ou visuel est délivré par un générateur de signaux (8), qui est alimenté en énergie par une alimentation en énergie indépendante du secteur, quand le lave-vaisselle automatique (1) est mise hors tension alors que le réservoir (5) est rempli.

8. Procédé selon la revendication 7,
**caractérisé en ce**
**qu'**une transmission d'informations intervient par le biais d'un afficheur (10) du lave-vaisselle automatique (1) en cas de couplage du lave-vaisselle automatique (1).

9. Procédé selon la revendication 7,
**caractérisé en ce**
**qu'**une vidange automatique du réservoir (5) est effectuée en cas de couplage du lave-vaisselle automatique (1).
